# EUROPEAN PATENT APPLICATION

(11) **EP 2 535 825 A1**
(43) Date of publication of application: **19.12.2012**
(21) Application number: 11305749.1
(22) Date of filing: 15.06.2011
(51) Int. Cl.: G06F 17/30, G06F 21/00

(54) **Method for uploading a file in an on-line storage system and corresponding on-line storage system**

(71) Applicant: Thomson Licensing, 92130 Issy-les-Moulineaux (FR)
(72) Inventor: Montalvo, Luis, 35576 CESSON-SEVIGNE (FR); Defrance, Serge, 35576 CESSON-SEVIGNE (FR); Le Scouarnec, Nicolas, 35576 CESSON-SEVIGNE (FR)
(74) Representative: Huchet, Anne

(57) **Abstract**

The present invention relates to a method for uploading in an on-line storage system a file from a user client device and a corresponding on-line storage system. The on-line storage system comprises a storage server (10) coupled to a target storage device (11) in which the file is to be stored. The method comprises the following steps:
- the user client device (30) uploads the file to a gateway (20) of the on-line storage system;
- the gateway stores the uploaded file in a gateway storage device;
-the gateway checks with the backup server the presence of the uploaded file in the target storage device;
- if said file is not present in the target storage device, the gateway uploads the file to the target storage device, and if said file is present in the target storage device, the gateway creates a link to the file stored in the target storage device.

## Description

### Field of the invention

The present invention relates to a method for uploading in an on-line storage system a file from a user client device and a corresponding on-line storage system.

### Background of the invention

Consumer cloud storage services are becoming increasingly popular, mainly due to the protection that they offer against catastrophic risks, such as for example fire or flood, that the on-site backup solutions cannot. For the sake of optimization of storage space and upload time, the storage service providers, called hereinafter SSPs, apply de-duplication techniques to the users' data. Since de-duplication is most effective when applied across multiple user accounts, inter-account de-duplication might become the preferred de-duplication technique among the SSPs. However, inter-account de-duplication has serious privacy implications. Besides the fact that the on-line-storage user entrusts the control of his data to the SSP, it has recently been demonstrated in "Side channels in cloud services de-duplication in cloud storage," of D. Harnik, B. Pinkas, and A. Shulman-Peleg, IEEE Security fd Privacy, vol. 8, no. 6, pp. 40-47, Nov. 2010, that inter-account de-duplication can be used, as a side channel by an adversary (a malicious user of the on-line storage system), to obtain information about the contents of other users' files.

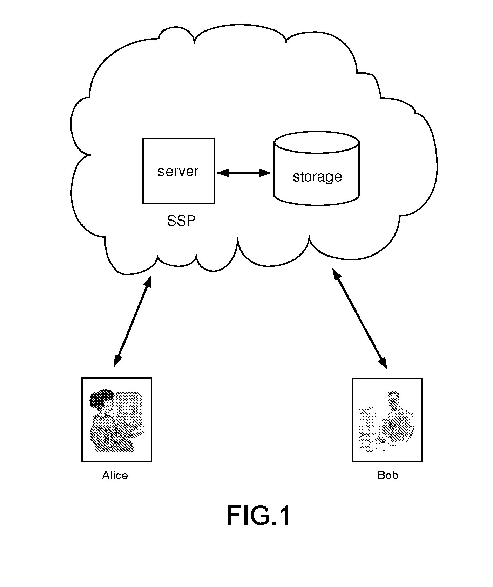

Figure 1 presents schematically the architecture of a state of the art on-line storage system. SSP represents a Storage Service Provider, and Alice and Bob represent two customers of the on-line storage service. There are two basic approaches to implement de-duplication in an state of the art on-line storage system.

In the server-based approach, the de-duplication is performed at the target storage service, and the customer is not aware of the eventual use of de-duplication by the SSP. The client software sends the contents of the file to the storage server independently of the existence of the file in the storage server. The server software of the SSP verifies that the file does not exist in the storage server and only in that case it stores the file in the server; otherwise, it replaces the file by a pointer to the already existing file. This technique avoids storage duplication but it does not save upload bandwidth.

In the client-based approach, the de-duplication is performed at the source of the data. Before sending a file, the client software communicates with the storage server, for example by sending the hash of the contents, in order to check if the file already exists in the storage server. If it does exist, the server software replaces the duplicate with a pointer and requests the client not to send the actual file over the network. This technique avoids storage duplication and saves upload bandwidth.

The consequence of implementing inter-account de-duplication using the client-based approach is that any user of the storage system can observe when de-duplication takes place and deduce if a file is already present in the storage server. Notice that this is possible independently if the duplicate file is stored in the user's account or in another user's account. The user can do this, for example, by examining the amount of data transferred over the network.

A malicious user could exploit this characteristic of the client-based inter-account on-line storage system to perform the following attacks:
1) "Identifying files" attack : Suppose that Alice, the attacker, suspects that Bob has stored in the on-line storage system a specific sensitive file X that is unlikely that any other user have; to verify her conjecture, Alice can try to save a copy of the file X and checks whether de-duplication occurs.
2) "Learning the contents of files" attack: Alice, the attacker, could apply the Identifying files attack, to multiple versions of the same file in order to get sensitive information contained in the duplicate file; this attack supposes that Alice has a standard template of the duplicate file that she can use to generate a moderate number of versions with small variations of the template.

It has been recently proposed a mechanism that reduces, but does not eliminate, the risk of data leakage in a client-based inter-account on-line storage system. The proposal is essentially the following:
For every file X, the storage server assigns a threshold tₓ, and performs de-duplication of the file X only if at least tₓ, copies of the file X have been uploaded to the on-line storage system. The threshold tₓ, is chosen randomly in the integer range [2, d], where d is a parameter that might be public, for example d = 20. No one but the server is able to compute tₓ.

It has been shown that for all but 1/(d-1) of the files, no information is leaked, whereas for the remaining files, where the threshold is set to tₓ=2 or tₓ=d, the attacker can find whether a copy of the file has been uploaded to the storage system. The probability that the attacker determines the existence of a file X in the storage server is at most 1/(d-1). Such a mechanism is called randomized de-duplication mechanism.

Regarding the cost of this solution, the persons who proposed this mechanism claim that, if popular files have many more than d copies, the expected cost is small compared to the benefit of using de-duplication. A larger value of d results in a higher cost, but it also provides better security.

The eventual success of the previously cited attacks is possible only if an on-line storage service applies inter-account de-duplication and uses the client-based approach for the de-duplication. The attacks are not effective if a server-based approach is used, but in that case, the bandwidth optimization benefit of de-duplication is lost because the files are always uploaded to the storage server and the de-duplication process is executed at the server side. Nevertheless, the use of the server-based de-duplication technique prevents the customers from identifying the occurrence of de-duplication.

Even if the risk of data leakage is reduced with the randomized de-duplication mechanism, it is not reduced to zero. Moreover, the randomized de-duplication mechanism consumes additional bandwidth compared to the client-based de-duplication. The risk of data leakage in these approaches, the client-based approach as well as the randomized server-based approach, comes from the fact that the client has a direct link to the storage server. In other words, the side channel and oracle attacks are feasible whenever the client has direct access to the content upload process.

### Summary of the invention

The problems outlined above are in large part solved by the method of the invention. A purpose of the invention is to propose a method for storing a file in an on-line storage system that allows the SSP to apply inter-account de-duplication and, at the same time, that substantially reduces the risk of information leakage for all the files stored in the system.

According to the invention, it is proposed a gateway-based approach for de-duplication that can not be used as a side channel by an attacker, as it is the case of the client-based approach.

An object of the present invention is a method for uploading in an on-line storage system a file from a user client device, said on-line storage system comprising a storage server coupled to a target storage device in which the file is to be stored, characterized in that it comprises the following steps:
- the user client device uploads the file to a gateway of the on-line storage system;
- the gateway stores the uploaded file in a gateway storage device;
- the gateway checks with the backup server the presence of the uploaded file in the target storage device;
- if said file is not present in the target storage device, the gateway uploads the file to the target storage device, and if said file is present in the target storage device, the storage server creates a link to the file stored in the target storage device.

According to the invention, the de-duplication is not carried out in the user client device or the storage server but in a gateway. Therefore, the probability that an attacker determines the existence of a file X in the storage server is substantially reduced.

Another object of the present invention is an on-line storage system for storing files from user client devices, comprising a storage server coupled to a target storage device in which the file is to be stored,
characterized in that it further comprises at least one gateway between the user client devices and the storage server, said gateway comprising a gateway storage device for storing files uploaded from user client devices, said gateway being able to check with the storage server if a file stored in the gateway storage device is already present in the target storage device and to upload said file in the target storage device only if it is not already present in the target storage device.

According to a particular embodiment, the gateway communicates with the storage server through a secured communication link.

Advantageously the gateway comprises a bandwidth manager to manage the traffic between the gateway and the storage server such that to maintain traffic even if the file X is not uploaded from the gateway to the server storage. It permits to obfuscate an eventual adversary that will monitor the traffic of the link between the gateway and the storage server to detect whether the de-duplication takes place or not.

In a particular embodiment, the gateway is included in a box of an internet service provider.

### Brief description of the drawings

Other objects and advantages of the invention will become apparent upon reading the following detailed description and upon reference to the accompanying drawings in which:
- Figure 1, already described, illustrates the architecture of an state of the art on-line storage system;
- Figure 2 illustrates the architecture of an on-line storage system according to the invention;
- Figure 3 is diagram showing the steps of the method according to the invention;
- Figure 4 illustrates a first software architecture of the system of figure 2;
- Figure 5 illustrates a second software architecture of the system of figure 2; and
- Figure 6 illustrates the function of a bandwidth manager of the system of Figure 5.

While the invention is susceptible to various modifications and alternative forms. Specific embodiments thereof are shown by way of example in the drawings and will herein be described in detail. It should be understood, however, that the drawings and detailed description thereto are not intended to limit the invention to the particular form disclosed. But on the contrary, the intention is to cover all modifications, equivalents and alternatives falling within the spirit and scope of the present invention as defined by the appended claims.

### Detailed description of the invention

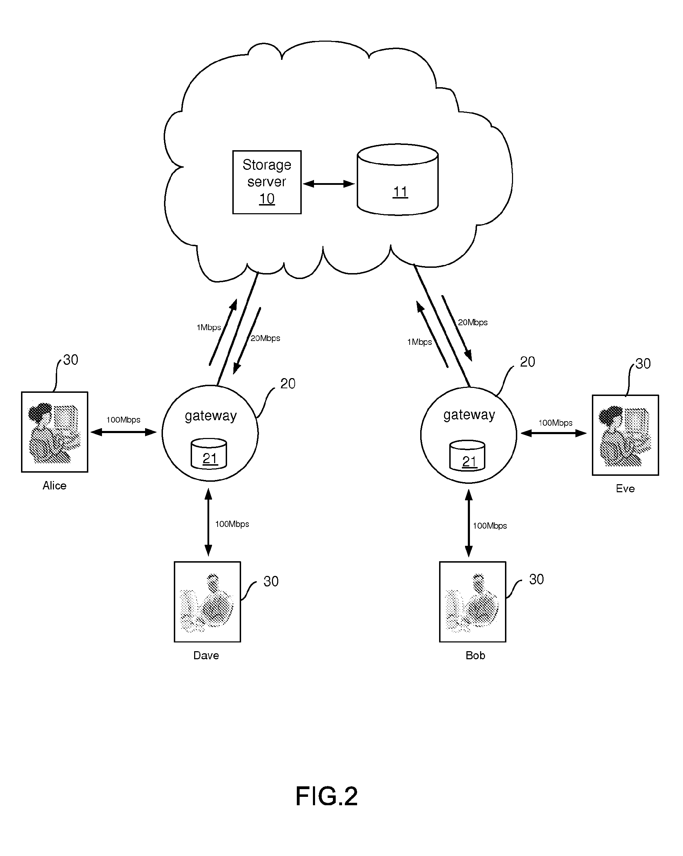

According to the invention, it is proposed to displace a part of the on-line storage software from the storage server to a residential gateway, as shown in figure 2, so that the storage server provider can render the de-duplication transparent to the user. In doing so, the SSP prevents malicious users to use de-duplication as a side channel to get information from other users' accounts. This process allows the Storage Service Provider (SSP) to apply intra-account as well as inter-account de-duplication and substantially reduces the risk that a malicious user obtains information from other users' accounts.

Figure 2 illustrates the architecture of the on-line storage system proposed by the invention. The on-line storage system comprises a storage server 10 coupled to a target storage device 11 and gateways 20. Each gateway is equipped with a gateway storage device 21. User client devices 30 are connected to the storage server of the SSP through the gateways 20. The target storage device 11 is deemed to store files coming from the user client devices 30. In this figure, Alice, Bob, Dave, and Eve represent customers of the on-line storage service.

The bandwidth available at each one of the communication segments of the system is given only for illustration purposes: 100 Mbps is the bandwidth commonly available at a residential network (Ethernet); 20 Mbps and 1 Mbps are respectively the down-link and up-link bandwidths, frequent in the ADSL Internet access.

In this embodiment, the user client devices access the on-line storage system from a residential network and the gateways provided by the Internet Service Provider (ISP) are equipped with a gateway storage device capable to store a moderate volume of data, for example 500 MBytes.

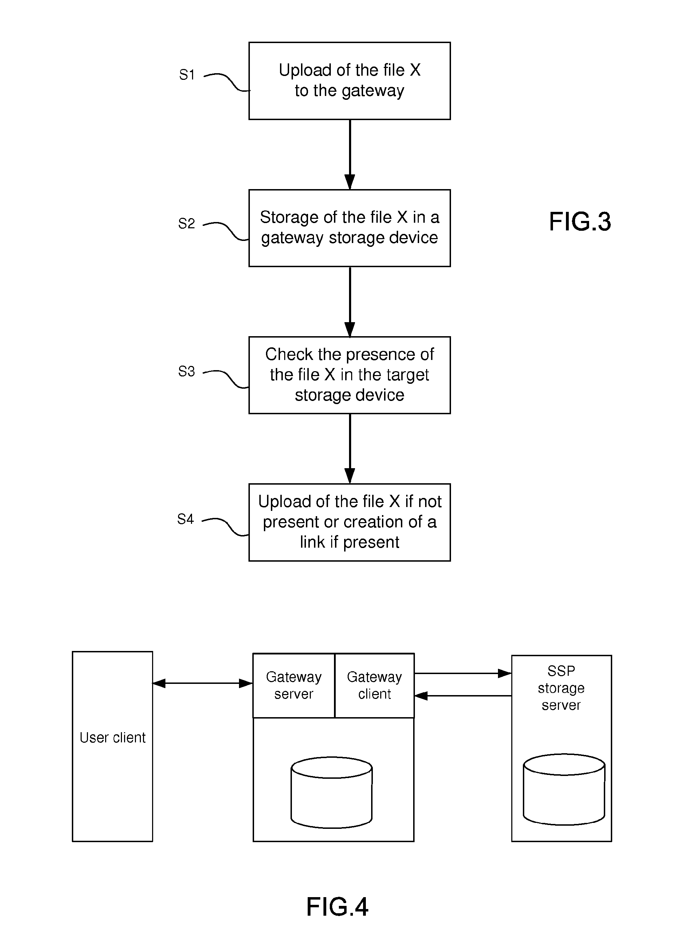

The method that takes place when a user client device 30 wishes to upload a file X to the target storage device 11 is illustrated by figure 3. It comprises the following steps:
- Step S1: the user client device 30 uploads the file X to the gateway 20; the gateway always accepts the file X from the user client device;
- Step S2: the gateway 20 stores the uploaded file in the gateway storage device 21;
- Step S3: the gateway 20 checks with the storage server 10 that the uploaded file is present or not in the target storage device 11;
- Step S4: if said file is not present in the target storage device 11, the gateway 20 uploads the file to the target storage device, and if said file is present in the target storage device, the gateway creates a link to the file stored in the target storage device.

Figure 4 presents the software architecture of the on-line storage system using the gateway-based approach for de-duplication according to the invention.

The software of the system is composed of four modules running on different devices placed at different locations: the SSP storage server is located at the SSP premises, the gateway server and client run on the ISP gateway that is located at the customer premises, and the user client runs on the user's device (e.g., PC, still-image camera, phone, etc.).

The process that takes place when the user wants to upload a file X to the on-line storage system is performed in two phases: during the first phase, the user client uploads the file X to the gateway server; and during the second phase, the gateway client uploads the file X to the SSP server (storage server).

The gateway server always accepts the file X coming from the user client so that the user can not determine that the SSP has implemented de-duplication. The gateway server stores the file in the gateway storage device and handles the upload task to the gateway client. It is the gateway client that carries out the de-duplication, i.e., it contacts the SSP server to verify that the file X is not present in the target storage device and only if X is not present, it uploads the file X to the SSP server.

In the present invention, the bandwidth savings are mainly on the communications segment from the gateway to the SSP server while there are no bandwidth savings on the segment from the user's device to the gateway. On the communications segment from the gateway to the DSLAM some bandwidth could be wasted. Under normal conditions, i.e. when the user simultaneously runs the cloud storage service and at least one of the other services provided by the gateway the bandwidth available at the ADSL up-link can be fully exploited. However, if the user (malicious or not) uses the cloud storage service only, and shuts down all the other available services, the ADSL up-link might be stuffed with some random encrypted traffic in order to hide the eventual de-duplication of a file X and to obfuscate a potential adversary.

In any case, the user is not penalized with regard to a cloud storage system where the server-based de-duplication is used. In addition, saving bandwidth at the level of the residential network is not as critical as saving bandwidth at the WAN level: first, because the available bandwidth at home (100 Mbps) is much higher than the ADSL bandwidth of the up-link (1 Mbps); and second, because the number of hops between the DSLAM and the SSP server is higher than the single hop between the gateway and the DSLAM. Several reports on Internet metrics show that the average number of hops between a host and a server is around 15.

The SSP must implement the required security and access control mechanisms on the gateway in order to preserve the integrity of the whole on-line storage service. Therefore, the user shall not be able to observe the network activity on the ADSL link and, consequently, he shall not be able to determine whether de-duplication takes place or not. In other words, a malicious user shall not be able to perform successfully any of the previously cited attacks.

This requirement related to the security and access control mechanisms on the gateway is not difficult to satisfy. Indeed, if the Internet Service Provider provides its customers with a package of Internet access and on-line storage services together, the requirement is quite simple to satisfy because the SSP and the ISP are the same institution. If this is not the case, the SSP should obtain an agreement with the ISP so that the ISP implements the security and access control mechanism to the on-line storage service on the gateway.

The on-line storage system according to the invention is thus a system that lets the SSP to apply inter-account de-duplication to save storage space as well as upload bandwidth, but that at the same time, substantially reduces the risk that a malicious user employs de-duplication as a side channel to attack the system and obtain information from other users' data.

The system is based on the gateway that is commonplace in residential networks for Internet access. The gateway is the host for a server and a client that takes care of the upload and download requests from the user.

It is the gateway client that is in charge of performing the inter-account de-duplication, by communicating with the SSP server before carrying out the actual upload of the data to the SSP server. Since the gateway server does not perform de-duplication and always accepts the data from the user client, the user can not observe whether de-duplication takes place or not.

Although the present solution is based on the gateway of a residential network, the invention can be applied to other Internet access networks. The idea of the invention is that the user must not be able to determine that the SSP applies inter-account de-duplication. Therefore, the SSP must insert in the communications path between the user client and the SSP server a server-client pair so that the user client does not communicate directly with the SSP server but rather with this new server that does not implement de-duplication. It is the client of the inserted server-client pair that is in charge of the de-duplication task. In other words, the user communicates with the on-line SSP server through a secured proxy that hides de-duplication to the user.

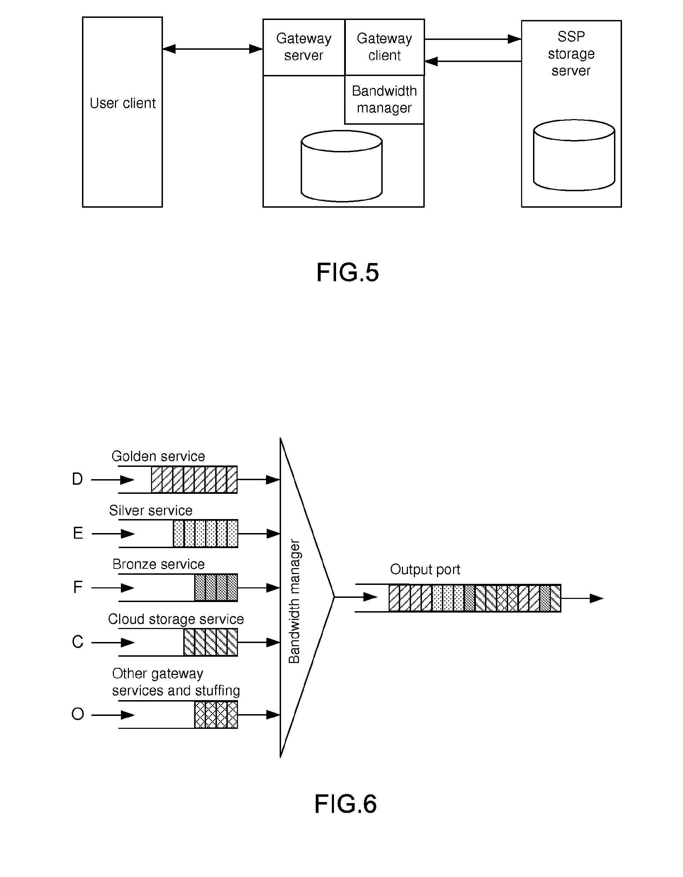

In a preferred embodiment, a bandwidth manager is added in the gateway of the system as illustrated by figure 5. The role of the gateway bandwidth manager is to obfuscate an eventual adversary. Indeed, a malicious user could use a bandwidth test tool to monitor the bandwidth availability of the up-link and to deduce whether the de-duplication takes place or not. So this bandwidth manager helps to improve the resistance of the system to attacks that use de-duplication as a side-channel.

The bandwidth manager may apply several strategies to achieve obfuscation. Details of the scheduler of this bandwidth manager are given hereinafter to illustrate his role.

Let D, E, F be three different types of service each with different QoS (Quality Of Service) requirements. D represents a gold service that requires real time support such as VoIP. E represents a silver service that does not require real time support such as the peer to peer traffic, and F represents a bronze service that requires no QoS guarantee such as Internet navigation (best effort traffic).

The cloud storage service can be classified as an E service but for the purpose of this analysis, let us denote it C. In order to show the obfuscation function of the bandwidth manager, let us also create an O service. The O traffic may be used to replace the C traffic when the file X uploaded by the user is already present in the SSP server.

The function of the scheduler of the bandwidth manager is to allocate a bandwidth Bₛ to each one of the services s (s ∈ {D, E, F, C, O}, according to a given policy, so that at any given time t : ∑ Bₛ ≤ Bₘₐₓ, where Bₘₐₓ is the maximum bandwidth available at the ADSL up-link.

Figure 6 presents schematically the bandwidth manager and the different types of service.

In order to obfuscate a malicious user, it is proposed that the bandwidth manager includes the following criteria into the allocation policy.

Let Iₓ be a binary function indicating the presence of the file X in the SSP server: if the file X is present in the server then Iₓ = 1, otherwise Iₓ = 0).

Let I_{B} be a binary function indicating that the sum of the traffic required by the D, E, and F services is smaller than Bₘₐₓ: if (B_{D} +B_{E} +B_{F}) < Bₘₐₓ, then I_{B} = 1, otherwise I_{B} = 0.

The bandwidth manager allocates B_{O} and B_{C} as is shown in Table 1, α is a real number in the range [0; 1].

**Table 1**

| I_{X} | I_{B} | B_{O} | B_{C} |
|---|---|---|---|
| 0 | 0 | 0 | 0 |
| 0 | 1 | Bo | Bₘₐₓ - (B_{D}+B_{E}+B_{F}+B_{O}) |
| 1 | 0 | 0 | 0 |
| 1 | 1 | (**α x B**ₘₐₓ)-(**B**_{D}+**B**_{E}+**B**_{F}) | 0 |

B_{O} may be useful traffic (not stuffing traffic) generated by other services offered by the gateway, the backup service is an example. The gateway plays a central role in the organization of the home network and when equipped with storage capacity it may temporarily store data, acting as a buffer between the home network and the Internet. Emptying this buffer may be one of the bandwidth manager strategies to obfuscate an eventual adversary. A malicious user could reduce to zero the bandwidth requirements of the services D, E, and F and to initiate an upload of the file X to the cloud storage service C in order to observe the traffic activity in the ADSL up-link. The parameter α lets the SSP to implement different levels of trade-off between the resistance of the cloud storage system to side-channel attacks (de-duplication) and the bandwidth savings in the ADSL uplink between the gateway and the DSLAM. If α = 1, the traffic on the ADSL up-link is always equal to Bₘₐₓ and the malicious user can not determine whether the de-duplication takes place or not but useless traffic could be sent on the up-link. If α = 0, the malicious user could eventually determine whether the de-duplication takes place or not but no useless traffic is sent on the uplink. If (0 < α < 1), the malicious user will be obfuscated but he could determine whether the de-duplication takes place or not. In order to carry out a successful attack, the adversary needs to monitor precisely the traffic activity of the ADSL up-link during a time t = X_{size}/B_{O}, where X_{size} is the size of the file X in bits. The lower the α the larger the time required to achieve a successful attack. In order to further obfuscate the adversary, the value of α could be chosen randomly at every scheduling period.

As under normal conditions the ADSL up-link always carries useful traffic, the user is not penalized concerning bandwidth availability.

## Claims

1. Method for uploading in an on-line storage system a file from a user client device (30), said on-line storage system comprising a storage server (10) coupled to a target storage device (11) in which the file is to be stored, **characterized in that** it comprises the following steps:
- the user client (30) device uploads the file to a gateway (20) of the on-line storage system;
- the gateway (20) stores the uploaded file in a gateway storage device (21);
- the gateway (20) checks with the storage server (10) the presence of the uploaded file in the target storage device (11);
- if said file is not present in the target storage device, the gateway (20) uploads the file to the target storage device, and if said file is present in the target storage device, the gateway (20) creates a link to the file stored in the target storage device.

2. On-line storage system for storing files from user client devices (30), comprising a storage server (10) coupled to a target storage device (11) in which the files are to be stored,
**characterized in that** it further comprises at least one gateway (20) between the user client devices and the storage server, said gateway comprising a gateway storage device (21) for storing files uploaded from user client devices,
said gateway being able to check with the storage server if a file stored in the gateway storage device is already present in the target storage device and to upload said file in the target storage device only if it is not already present in the target storage device.

3. On-line storage system according to claim 2, wherein the gateway communicates with the storage server through a secured communication link.

4. On-line storage system according to claim 2 or 3, wherein the gateway comprises a bandwidth manager to manage the traffic between the gateway and the storage server such that to maintain traffic even if the file X is not uploaded from the gateway to the server storage.

5. On-line storage system according to any claims 2 to 4, wherein said gateway is included in a box of an internet service provider.
